(19) Europäisches Patentamt
European Patent Office
Office européen des brevets

(11) **EP 1 884 448 B1**

(12) **EUROPEAN PATENT SPECIFICATION**

(45) Date of publication and mention
of the grant of the patent:
**14.09.2011 Bulletin 2011/37**

(51) Int Cl.:
*B62D 6/00* (2006.01)    *B62D 7/15* (2006.01)

(21) Application number: **06015840.9**

(22) Date of filing: **29.07.2006**

(54) **Method of controlling an active rear wheel steering system**

Regelmethode für aktive Hinterradlenkung

Méthode de réglage d'un système de direction des roues arrières

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**06.02.2008 Bulletin 2008/06**

(73) Proprietor: **GM Global Technology Operations
LLC
Detroit, MI 48265-3000 (US)**

(72) Inventor: **Habring, Fredrik
41260 Göteborg (SE)**

(74) Representative: **Daniel, Ulrich W.P.
Adam Opel AG,
Patent- und Markenrecht A0-02
65423 Rüsselsheim (DE)**

(56) References cited:
**US-A- 5 615 117        US-A- 6 073 067
US-A1- 2002 195 293**

**EP 1 884 448 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

**FIELD OF THE INVENTION**

The present invention generally relates to control strategies for controlling vehicle stability and handling and particularly relates to a method of controlling an active rear wheel steering system (RWS system).

**BACKGROUND ART**

In recent years, in automotive industries, more and more cars have been equipped with electronically controlled stability control systems on account of the fact that many of the severe traffic accidents result from a loss of control of the vehicle. Examples of these modern safety systems are the antilock brake system (ABS), the electronic stability program (ESP) and active front steering (AFS).

ABS and ESP employ the brakes to stabilize the vehicle in critical situations, which, however, necessarily results in a net-reduction of the vehicle's speed, which, however, may not be desirable in view of driving pleasure and comfort. Contrary thereto, without employing the brakes, AFS works by adjusting the steering ratio between the steering wheel angle and the front wheel angles, thereby assisting the driver in critical situations.

In the developer's efforts to improve vehicle stability and handling, as an alternative to AFS, usage of active rear wheel steering (RWS) has been envisaged, which, however, conventionally being based on front wheel angle only may not sufficiently satisfy the needs.

In light of the above, it is an object of the present invention to provide an improved method of controlling an active rear wheel steering system in order to improve vehicle stability and handling.

US-A-5, 615, 117 and US-A-6, 073, 067 and US-patent application 2002/195293 disclose technical background with respect to the present invention. More particularly, each of these documents disclose a method to perform control to limit the rear wheel steering actuators for avoiding saturation.

**SUMMARY OF THE INVENTION**

In light of the above, the present invention discloses a method of controlling an active rear wheel steering (RWS) system of a vehicle. The active RWS system comprises steerable rear wheels that may be steered by means of at least one actuator which is operatively coupled to the rear wheels for their steering on basis of a rear wheel angle command signal $( \delta_r^{cmd} )$ that is provided from a control system to thereby effect an actual rear wheel angle ($\delta_r$).

In order to generate the rear wheel angle command signal $( \delta_r^{cmd} )$, the control system is provided with a lateral speed ($v_y$) of the vehicle, a yaw rate ($\dot{\psi}$) of the vehicle, a front wheel angle ($\delta_f$) of the front wheels of the vehicle and a rear wheel angle ($\delta_r$) of the rear wheels of the vehicle. Such input signals can be sensed by dedicated sensing means connected to the control system which are known to those of skill in the art and, thus, need not be further detailed herein. In the present invention, it is assumed that the dynamics of the at least one actuator acting on the rear wheels can be described by the following linear model: $\dot{\delta}_r + \omega_0 \delta_r = \omega_0 \delta_r^{cmd}$

with $\omega_0$ being a selectable maximum speed of the actuator. Furthermore, in the present invention, it is assumed that the dynamics of the vehicle can be described by the following linear model:

$$\begin{bmatrix} \dot{v}_y \\ \ddot{\psi} \end{bmatrix} = \begin{bmatrix} a_{11} & a_{12} \\ a_{21} & a_{22} \end{bmatrix} \begin{bmatrix} v_y \\ \dot{\psi} \end{bmatrix} + \begin{bmatrix} b_{f1} \\ b_{f2} \end{bmatrix} \delta_f + \begin{bmatrix} b_{r1} \\ b_{r2} \end{bmatrix} \delta_r$$

with $a_{11}$, $a_{12}$, $a_{21}$, $a_{22}$, $b_{f1}$, $b_{f2}$, $b_{r1}$, $b_{r2}$ being selectable constants dependent on the vehicle and the longitudinal speed of the vehicle to determine reference values $v_y^{des}$, $\dot{\psi}^{des}$ of the lateral speed $v_y$ and the yaw rate $\dot{\psi}$, respectively.

In the present invention, the control system is adapted to perform feedback control of the active RWS system and adapted to generate a feedback rear wheel angle command signal $( \delta_r^{cmd} )_{FB}$ using the following equations:

$$\begin{bmatrix} \dot{\eta}_1 \\ \dot{\eta}_2 \\ \dot{\eta}_3 \end{bmatrix} = \begin{bmatrix} a_{11} & a_{12} & b_{r1} \\ a_{21} & a_{22} & b_{r2} \\ 0 & 0 & -\omega_0 \end{bmatrix} \begin{bmatrix} \eta_1 \\ \eta_2 \\ \eta_3 \end{bmatrix} + \begin{bmatrix} 0 \\ 0 \\ \omega_0 \end{bmatrix} + (\delta_r^{cmd})_{FB} + w$$

where the states $\eta_1$, $\eta_2$, $\eta_3$ are an error of the lateral speed $v_y$, an error of the yaw rate $\dot{\psi}$, and the rear wheel angle $\delta_r$, respectively, as given by

$$[\eta] = \begin{bmatrix} \eta_1 \\ \eta_2 \\ \eta_3 \end{bmatrix} = \begin{bmatrix} v_y - v_y^{des} \\ \dot{\psi} - \dot{\psi}^{des} \\ \delta_r \end{bmatrix}$$

with w being a disturbance term that is given by

$$w = \begin{bmatrix} b_{f1} \\ b_{f2} \\ 0 \end{bmatrix} \delta_f + \begin{bmatrix} a_{11} & a_{12} & b_{r1} \\ a_{21} & a_{22} & b_{r2} \\ 0 & 0 & -\omega_0 \end{bmatrix} \begin{bmatrix} v_y^{des} \\ \dot{\psi}_{des} \\ 0 \end{bmatrix} .$$

In the present invention, the feedback rear wheel angle command signal $(\delta_r^{cmd})_{FB}$ is determined by

$$(\delta_r^{cmd})_{FB} = -L\eta$$

where L is a matrix such that the cost function

$$J = \int_0^\infty \left( q_1 \eta_1^2 + q_2 \eta_2^2 + R(\delta_r^{cmd})_{FB}^2 \right) dt$$

is minimized, where $q_1$, $q_2$ and R are selectable weighting constants which can make a trade-off between yaw rate error, lateral speed error and size of control signal efficient.

Accordingly, using a 3-state linear model for the yaw rate error, the lateral speed error and the rear wheel angle together with a state feedback control (linear quadratic control) to determine the proper rear wheel angle, vehicle handling and stability can be improved such that the driver can more easily maintain control of the vehicle. A trade-off between controlling on the yaw rate and controlling on the lateral speed is effectively done.

According to a preferred embodiment of the invention, the control system further enables feed-forward control of the active rear wheel steering system. To this aim, the control system is adapted to generate a feed-forward rear wheel angle command signal $(\delta_r^{cmd})_{FF}$ in proportionality to the front wheel angle $\delta_f$ of the front wheels of the vehicle determined by

$$(\delta_r^{cmd})_{FF} = K \cdot \delta_f$$

with K being a selectable parameter, usually called "gain". Advantageously, gain K is selected to be dependent on the

longitudinal speed $v_x$ of the vehicle and an estimation of the coefficient of friction between the tire and road $\hat{\mu}$.

Other and further objects, features and advantages of the invention will appear more fully from the following description.

**BRIEF DESCRIPTION OF THE DRAWINGS**

The accompanying drawings, which are incorporated in and constitute a part of the specification, illustrate an embodiment of the invention, and together with the general description given above and the detailed description given below, serve to explain the principles of the invention.

FIG. 1       depicts an overview of a vehicle having implemented an active RWS system according to the present invention;

FIG. 2       is a block diagram of the active RWS system of FIG.1;

FIG. 3       illustrates an exemplary relationship between feed forward gain K and longitudinal speed $v_x$ of the vehicle;

FIG. 4       illustrates a linear model of the planar dynamics of a vehicle;

FIG. 5       depicts the transition between global and vehicle-fixed coordinate systems;

FIG. 6A     is a block diagram of the feedback control system in the time domain without saturation of the control signal;

FIG. 6B     is a block diagram of the feedback control system in the time domain with saturation of the control signal.

**DETAILED DESCRIPTION OF THE INVENTION**

The present invention will be described in detail below with reference to the accompanying drawings, where like designations denote like or similar elements.

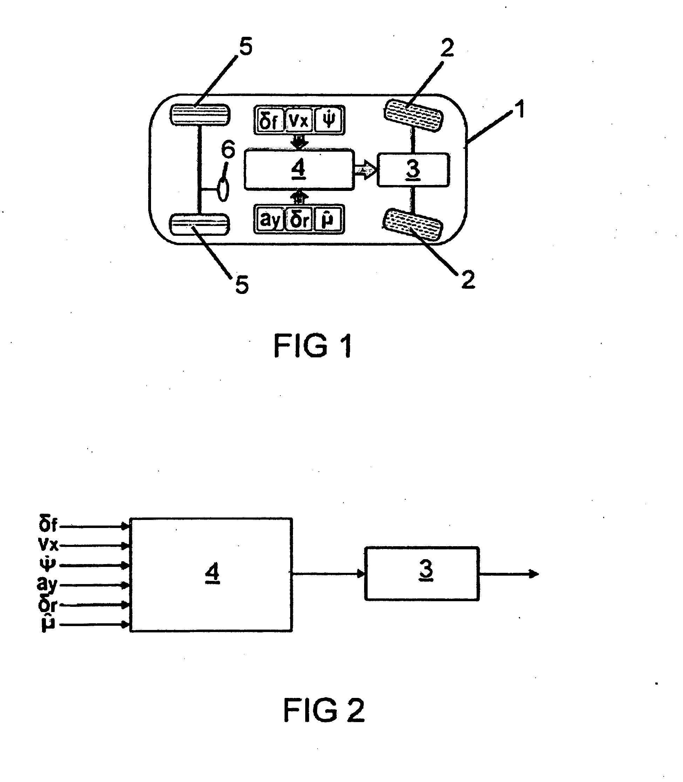

First, reference is made to FIGS. 1 and 2 with FIG. 1 illustrating an overview of a vehicle having implemented an active RWS system according to the present invention and with FIG. 2 being block diagram of the active RWS system of FIG.1.

Accordingly, the active RWS system of the vehicle 1 comprises steerable rear wheels 2 that may be turned (i.e. steered) by at least one actuator 3 integrated in the vehicle's rear suspension and being operatively coupled to the rear wheels 2 for steering on basis of input signals supplied of a control system 4. More specifically, in the active RWS system, the control system 4 is designed to output a rear wheel angle command signal $\delta_r^{cmd}$ to the actuators 3 that act on the rear wheels to thereby effect an actual rear wheel angle $\delta_r$ in accordance with the rear wheel angle command signal $\delta_r^{cmd}$ the actuators are provided with.

In the active RWS system, a plurality of sensors are used to gather information about the current vehicle state in order to generate an appropriate rear wheel angle command signal $\delta_r^{cmd}$ to be delivered to the actuators 3.

As can be taken from FIGS. 1 and 2, the sensor signals delivered to the control system 4 include:

- the front wheel angle $\delta_f$, that either is measured directly using a front wheel angle sensor means for sensing the wheel angle of front wheels 5 or is estimated from the steering wheel angle that is measured using a steering wheel angle sensor means for sensing of the angle of the steering wheel 6;
- the longitudinal speed $v_x$ of the vehicle 1 that either is measured directly using a longitudinal speed sensor means for sensing of the longitudinal speed of the vehicle or is estimated from measurements of the wheel speeds of front wheels 5 or back wheels 2;
- the yaw rate $\dot{\psi}$ of the sprung mass of the vehicle 1 that is measured using a yaw rate sensor means for sensing of the yaw rate of the vehicle;
- the lateral acceleration $a_y$ of the vehicle 1 that is measured using a lateral acceleration sensor means for sensing of the lateral acceleration of the vehicle, the output of which may be filtered so that a contribution to the lateral acceleration that comes from banking can be removed;
- the rear wheel angle $\delta_r$ of rear wheels 2 that either is measured directly using a rear wheel angle sensor means for sensing of the wheel angle of the rear wheels or is estimated from the dynamics of the RWS acuator(s) 3;

- the coefficient of friction $\hat{\mu}$ between the tire and the road that is estimated using conventional algorithms as, for example, disclosed in Alvarez, L. et al., 2005, "Dynamic Friction Model-based Tire-Road Friction Estimation and Emergency Braking Control", AMSE Journal of Dynamic Systems, Measurement, and Control, Vol. 127, pp. 22-32 or for example in Gustafsson, F., 1997, "Slip-Based Tire-Road Friction Estimation", Automatica, Vol. 33, No. 6, pp. 1087-1099.

The actuator(s) 3 operatively coupled to the rear wheels 2 can for instance be two separate actuators, one for each wheel, or can also be only one actuator that is connected to both rear wheels. The actuators, for instance, can be electric or hydraulic actuators and can have different mechanical properties. However, herein, the actuators are assumed to have some common properties:

- There is an upper limit $\delta_r^{max}$ on the rear wheel angles that can be delivered, i.e. the rear wheel angles $\delta_r$ that can be generated by the RWS actuators 3 have an upper limit such that

$$\left| \delta_r(t) \right| \leq \delta_r^{max}, \ \forall t \, ,$$

is fulfilled, with t being the time.

- There is an upper limit $v_r^{max}$ on the rate of change of the rear wheel angle, which means that the RWS actuators cannot change the rear wheel angles $\delta_r$ infinitely fast, i.e. the following relation is satisfied:

$$\left| \dot{\delta}_r(t) \right| \leq v_r^{max}, \ \ \forall t \, ,$$

with t being the time.
- The RWS actuators have low-pass characteristics, which means that the actuators can generate all frequencies in the input signal up to a certain finite frequency. In other words, the exact transfer function from the rear wheel angle command signal $\delta_r^{cmd}$ to the actual rear wheel angle $\delta_r$ which is denoted by $G_{act}^{\bullet}(s)$ can be approximated by another transfer function, $G_{act}(s)$, where

$$G_{act}(s) = \frac{1}{1 + \tau_0 s}, \ \ \tau_0 > 0, \qquad\qquad (1)$$

is fulfilled, with $\tau_0$ being a time constant.

Hence, the three quantities $\delta_r^{max}$, and $\tau_0$ are the design parameters for the actuators. Since the actuators in the present invention are assumed to be linear actuators, the time constant $\tau_0$ is related to the rate limit $v_r^{max}$ so that the maximum speed of the linear actuator is $v_r^{max}$.

In order to obtain a relationship between $\tau_0$ and $v_r^{max}$, the input signal $\delta_r^{cmd}$ is assumed to be a step function

$$\delta_r^{cmd}(t) = \Lambda_0, \ \text{if} \ t \geq 0 \ \text{and} \ \delta_r^{cmd}(t) = 0, \ \text{if} \ t < 0$$

which has the Laplace transform $\Delta_r^{cmd}(s)$ given by $\Delta_r^{cmd}(s) = \dfrac{\Lambda_0}{s}$.

The absolute value of the time derivative of the output $\delta_r(t)$ which is denoted by $|\dot{\delta}_r(t)|$ has its maximum value at time t=0, which is a property of all low-pass filters on the form of equation (1).

Using the initial value theorem, as for instance disclosed in Rade et al., 1998, Mathematics Handbook for Science and Engineering, the following result is found:

$$\lim_{t \to 0} \left| \dot{\delta}_r(t) \right| = \lim_{s \to 0} \left| s^2 \Delta_r(s) \right| = \lim_{s \to 0} \left| \frac{\Lambda_0 s}{1 + \tau_0 s} \right| = \left| \frac{\Lambda_0}{\tau_0} \right|.$$

The desired properties of the low-pass filter $G_{act}(s)$ are obtained by specifying that

$$\max_t \left| \dot{\delta}_r(t) \right| = \frac{|\Lambda_0|}{\tau_0} = v_r^{max}.$$

By choosing $|\Lambda_0|=1$, the relationship between $\tau_0$ and $v_r^{max}$ is given by $\tau_0 = \dfrac{1}{v_r^{max}}$.

Hence the bandwith of the system $G_{act}(s)$ becomes:

$$\omega_0 \overset{def}{=} \frac{1}{\tau_0} = v_r^{max}.$$

The linear RWS actuator as given by $G_{act}(s) = \dfrac{1}{1 + \tau_0 s}$, $\tau_0 > 0$ can alternatively be expressed in the time domain as:

$$\dot{\delta}_0(t) + \omega_0 \delta_r(t) = \omega_0 \delta_r^{cmd}(t) \qquad\qquad (2)$$

In the embodiment of the present invention, the control strategy consists of delivering a feed-forward control component $(\delta_r^{cmd})_{FF}$ and a feedback control component $(\delta_r^{cmd})_{FB}$. Together, these two components constitute the rear wheel angle command signal $\delta_r^{cmd}$ which is delivered to the RWS actuators by the RWS control system, i.e.:

$$\delta_r^{cmd} = (\delta_r^{cmd})_{FF} + (\delta_r^{cmd})_{FB}.$$

The feed-forward component $(\delta_r^{cmd})_{FF}$ is made up of a variable gain K times the front wheel angle $\delta_f$, i.e.

$$(\delta_r^{cmd})_{FF} = K \cdot \delta_f \,.$$

The variable gain K is designed so that the dynamic behaviour of the vehicle is improved. Herein, the feed-forward control is constructed such that the following effects are achieved:

- The oversteering tendencies at high speed are reduced.
- The turning radius at low speed is reduced.
- The oversteering tendencies on low-$\mu$ surfaces are reduced.

In order to achieve above effects, the gain K is dependent on the longitudinal speed of the vehicle $v_x$ and an estimation of the coefficient of friction between the tire and road $\hat{\mu}$, i.e.

$$(\delta_r^{cmd})_{FF} = K(v_x, \hat{\mu}) \cdot \delta_f \,.$$

If the rear wheels steer in the same direction as the front wheels, then K > 0. If the rear wheels steer in the opposite direction of the front wheels, then K < 0. Since the purpose of the feed-forward control is to reduce over-steering at high speed and to reduce the turning radius at low speed, the gain K is greater than zero at high speed and less than zero at low speed. In order to reduce over-steering on low-$\mu$ surfaces, the gain K increases for all speeds when the vehicle is on a low-$\mu$ surface.

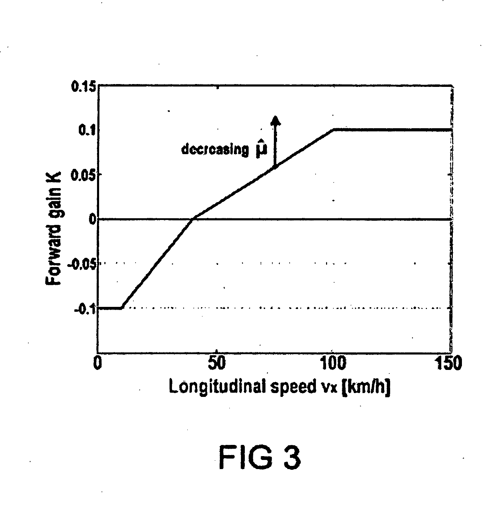

Reference is now made to FIG. 3, which diagrammatically depicts feed forward gain K as given as a function of the longitudinal speed $v_x$ of the vehicle and an estimate of the coefficient of friction. It is evident that the gain characteristics shown in FIG. 3 may achieve above three criteria of the vehicle dynamic effects.

Furthermore, the feed-forward control makes the RWS control system faster. The reason for this is that, since the rear wheel angle command signal $(\delta_r^{cmd})_{FF}$ is a function of the front wheels, stabilization using the rear wheels is executed very rapidly after the driver makes the steering input. If the rear wheel angle command signal $\delta_r^{cmd}$ consists of a feedback component only, the RWS control system cannot affect the vehicle dynamics until there is a difference between the desired output and the measured output. This compensation takes much longer because of the time delay between, for instance, the steering input and the measured yaw rate.

In the RWS control system of the present invention, aside from the above-described feed-forward control, active RWS system feedback control is performed. The system to be controlled is the dynamics of the vehicle in the horizontal plane. A linear model of this system is found by combining the linear actuator as above-described and a linear vehicle dynamics model.

In the linear vehicle dynamics model, when the turning radius of the vehicle is much greater than the track width of the vehicle, which is the case for high speed cornering, the track width can be neglected and the vehicle dynamics can be approximated by the so called bicycle model.

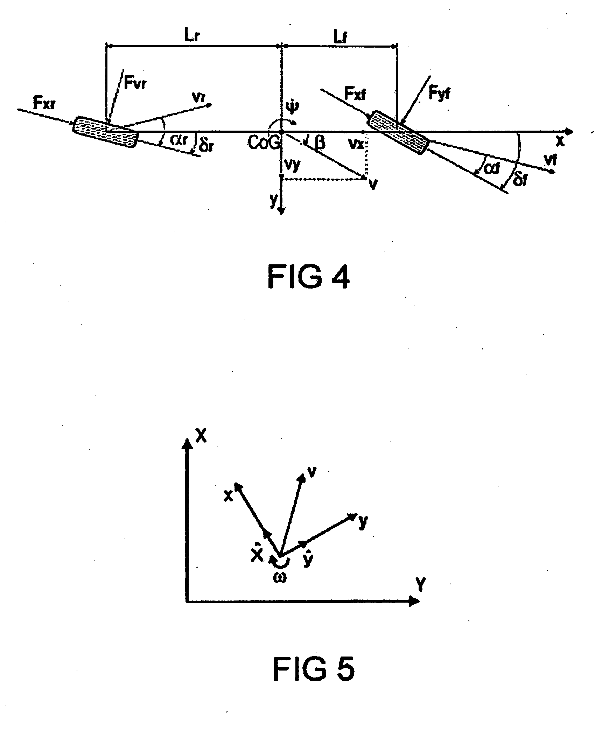

Reference is now made to FIG. 4 which illustrates the bicycle model of the vehicle, i.e. a linear model of the planar dynamics of the vehicle. Applying the generalized second law of Newton to the bicycle model, using a fixed global coordinate system XYZ gives:

$$I_{zz}\frac{d\dot{\psi}}{dt} = \sum_i M_{zi},$$
$$m\,\frac{dv}{dt} = \sum_i F_i, \qquad\qquad (3)$$

where $M_{zi}$ is a moment about the z-axis of the vehicle and $F_i$ is a force acting on one of the tires.

In order to express above equations (3) in the vehicle-fixed coordinate system xyz, which is attached to the center of gravity of the vehicle, reference is made to FIG. 4 illustrating the transition between a global and vehicle-fixed coordinate system. Consider a vehicle-fixed coordinate system xyz rigidly attached to the vehicle, which has the unit

vectors $\hat{x}$, $\hat{y}$ and $\hat{z}$ .

Assume that the vehicle is rotating with an angular velocity ω in the x-y-plane with respect to a fixed global frame XYZ. Hence the rotation can be written as ω=ω$\hat{z}$.

Let v be the vehicle's velocity vector, which is defined in the rotating frame xyz as v = $v_x\hat{x}+v_y\hat{y}$. The time derivative of v as seen by the fixed frame XYZ can be expressed as

$$\dot{v} = \frac{dv}{dt} = \frac{d}{dt}(v_x\hat{x} + v_y\hat{y}) = (\dot{v}_x\hat{x} + \dot{v}_y\hat{y}) + (v_x\dot{\hat{x}} + v_y\dot{\hat{y}}) \qquad (4).$$

Since the vehicle only rotates in the x-y-plane, as for example is shown in Meriam, J. L. et al., 1998, Engineering Mechanics - Dynamics, 4th edn., New York, John Wiley & Sons, Incs., the vectors $\dot{\hat{x}}$ and $\dot{\hat{y}}$ can be expressed as

$$\dot{\hat{x}} = \omega\hat{y}, \qquad \dot{\hat{y}} = -\omega\hat{x} \qquad (5).$$

Hence the right-hand side of equation (4) can be rewritten using equation (5), giving the following result for the time derivative of v as seen by the fixed fram XYZ:

$$\dot{v} = (\dot{v}_x - v_y\omega)\hat{x} + (\dot{v}_y + v_x\omega)\hat{y} \qquad (6).$$

Now, using equation (6), in order to express equations (3) in the vehicle-fixed coordinate system xyz, which is attached to the center of gravity of the vehicle, the following three equations can be obtained:

$$I_{zz}\frac{d\dot{\psi}}{dt} = F_{xf}L_f\sin\delta_f + F_{yf}L_f\cos\delta_f - F_{yr}L_r\cos\delta_r - F_{xr}L_r\sin\delta_r,$$

$$m(\frac{dv_x}{dt} - v_y\dot{\psi}) = F_{xf}\cos\delta_f - F_{yf}\sin\delta_f + F_{xr}\cos\delta_r - F_{yr}\sin\delta_r,$$

$$m(\frac{dv_y}{dt} - v_x\dot{\psi}) = F_{xf}\sin\delta_f - F_{yf}\cos\delta_f + F_{xr}\sin\delta_r - F_{yr}\cos\delta_r.$$

The slip angles $\alpha_f$ and $\alpha_r$ are assumed to be small. Then the constitutive relations between the lateral tire forces and the slip angles are linear and they are given by:

$$F_{yf} = C_f\alpha_f,$$

$$F_{yr} = C_r\alpha_r.$$

From the geometry of FIG. 3, the following relations can be found:

$$\tan(\delta_f - \alpha_f) = \frac{L_f\dot{\psi} + v_y}{v_x},$$

$$\tan(\alpha_r - \delta_r) = \frac{L_r\dot{\psi} - v_y}{v_x}.$$

The dynamics of the bicycle model in the x-y-plane can now be described by the following system of nonlinear differential equations:

$$I_{zz}\frac{d\dot{\psi}}{dt} = F_{xf}L_f\sin\delta_f + C_f\left[\delta_f - \arctan\left(\frac{L_f\dot{\psi} + v_y}{v_x}\right)\right]L_f\cos\delta_f -$$

$$C_r\left[\delta_r + \arctan\left(\frac{L_r\dot{\psi} - v_y}{v_x}\right)\right]L_r\cos\delta_r - F_{xr}L_r\sin\delta_r,$$

$$m\left(\frac{dv_x}{dt} - v_y\dot{\psi}\right) = F_{xf}\cos\delta_f - C_f\left[\delta_f - \arctan\left(\frac{L_f\dot{\psi} + v_y}{v_x}\right)\right]\sin\delta_f +$$

$$F_{xr}\cos\delta_r - C_r\left[\delta_r + \arctan\left(\frac{L_r\dot{\psi} - v_y}{v_x}\right)\right]\sin\delta_r, \tag{7}$$

$$m\left(\frac{dv_y}{dt} - v_x\dot{\psi}\right) = F_{xf}\sin\delta_f + C_f\left[\delta_f - \arctan\left(\frac{L_f\dot{\psi} + v_y}{v_x}\right)\right]\cos\delta_f +$$

$$F_{xr}\sin\delta_r + C_r\left[\delta_r + \arctan\left(\frac{L_r\dot{\psi} - v_y}{v_x}\right)\right]\cos\delta_r.$$

Due to the linear vehicle dynamics model, the following additional assumptions can be made:

- constant longitudinal speed: $\dot{v}_x \equiv 0$
- small longitudinal forces: $F_{xf} \approx F_{xr} \approx 0$

Together with the fact that $\sin x \approx x$, $\cos x \approx 1$, $\arctan x \approx x$ for small values of x, the nonlinear system of equations (7) becomes a second order linear system:

$$I_{zz}\frac{d\dot{\psi}}{dt} = \left(\frac{C_rL_r - C_fL_f}{v_x}\right)v_y - \left(\frac{C_fL_f^2 - C_rL_r^2}{v_x}\right)\dot{\psi} + C_fL_f\delta_f - C_rL_r\delta_r,$$

$$m\frac{dv_y}{dt} = -\left(\frac{C_f + C_r}{v_x}\right)v_y + \left(\frac{C_rL_r - C_fL_f}{v_x} - mv_x\right)\dot{\psi} + C_f\delta_f + C_r\delta_r. \tag{8}$$

By defining

$$a_{11} = -\left(\frac{C_f + C_r}{mv_x}\right), \quad a_{12} = \frac{C_r L_r - C_f L_f}{mv_x} - v_x, \quad a_{21} = \frac{C_r L_r - C_f L_f}{I_{zz} v_x} - v_x,$$

$$a_{22} = -\left(\frac{C_f L_f^2 + C_r + L_r^2}{I_{zz} v_x}\right), \quad b_{f1} = \frac{C_f}{m}, \quad b_{f2} = \frac{C_f L_f}{I_{zz}},$$

$$b_{r1} = \frac{C_r}{m}, \quad b_{r2} = -\frac{C_r L_r}{I_{zz}},$$

equations (8) can be written as

$$\begin{bmatrix} \dot{v}_y \\ \ddot{\psi} \end{bmatrix} = \begin{bmatrix} a_{11} & a_{12} \\ a_{21} & a_{22} \end{bmatrix} \begin{bmatrix} v_y \\ \dot{\psi} \end{bmatrix} + \begin{bmatrix} b_{f1} \\ b_{f2} \end{bmatrix} \delta_f + \begin{bmatrix} b_{r1} \\ b_{r2} \end{bmatrix} \delta_r \qquad (9)$$

where the parameters $a_{ij}$ are dependent on the longitudinal speed of the vehicle.

The linear actuator model as given by equation (2) and the linear vehicle dynamics model as given by equation (9) together create the following three state linear dynamic system:

$$\begin{bmatrix} \dot{v}_y \\ \ddot{\psi} \\ \dot{\delta}_r \end{bmatrix} = \begin{bmatrix} a_{11} & a_{12} & b_{r1} \\ a_{21} & a_{22} & b_{r2} \\ 0 & 0 & -\omega_0 \end{bmatrix} \begin{bmatrix} v_y \\ \dot{\psi} \\ \delta_r \end{bmatrix} + \begin{bmatrix} 0 \\ 0 \\ \omega_0 \end{bmatrix} (\delta_r^{cmd})_{FB} + \begin{bmatrix} b_{f1} \\ b_{f2} \\ \omega_0 K \end{bmatrix} \delta_f$$

where $K = K(v_x, \hat{\mu})$ is for example given as disclosed in FIG. 3.

Accordingly, all three states $v_y$, $\dot{\psi}$ and $\delta_r$ are used in the feedback control. This means that the lateral speed $v_y$ and the yaw rate $\dot{\psi}$ are to follow the desired lateral speed $v_y^{des}$ and the desired yaw rate $\dot{\psi}^{des}$ which are generated by the linear vehicle dynamics model as above described. In addition, the rear wheel angle $\delta_r$ should be centered about zero degrees. It is therefore convenient to define the three new signals or states:

$$\eta_1 = v_y - v_y^{des}$$

$$\eta_2 = \dot{\psi} - \psi^{des}$$

$$\eta_3 = \delta_r$$

Assuming that the reference signals $v_y^{des}$ and $\dot{\psi}^{des}$ are both piecewise constant and continuous, the following error model is found:

$$
\begin{bmatrix} \dot{\eta}_1 \\ \dot{\eta}_2 \\ \dot{\eta}_3 \end{bmatrix} = \begin{bmatrix} a_{11} & a_{12} & b_{r1} \\ a_{21} & a_{22} & b_{r2} \\ 0 & 0 & -\omega_0 \end{bmatrix} \begin{bmatrix} \eta_1 \\ \eta_2 \\ \eta_3 \end{bmatrix} + \begin{bmatrix} 0 \\ 0 \\ \omega_0 \end{bmatrix} + (\delta_r^{cmd})_{FB} +
$$

$$
\begin{bmatrix} b_{f1} \\ b_{f2} \\ \omega_0 K \end{bmatrix} \delta_f + \begin{bmatrix} a_{11} & a_{12} & b_{r1} \\ a_{21} & a_{22} & b_{r2} \\ 0 & 0 & -\omega_0 \end{bmatrix} \begin{bmatrix} v_y^{des} \\ \dot{\psi}_{des} \\ 0 \end{bmatrix}
\qquad (10)
$$

By defining

$$
A = \begin{bmatrix} a_{11} & a_{12} & b_{r1} \\ a_{21} & a_{22} & b_{r2} \\ 0 & 0 & -\omega_0 \end{bmatrix}, \quad B = \begin{bmatrix} 0 \\ 0 \\ \omega_0 \end{bmatrix}, \quad \eta = \begin{bmatrix} \eta_1 \\ \eta_2 \\ \eta_3 \end{bmatrix},
$$

$$
u = (\delta_r^{cmd})_{FB}, \quad \omega = \begin{bmatrix} b_{f1} \\ b_{f2} \\ \omega_0 K \end{bmatrix} \delta_f + A \begin{bmatrix} v_y^{des} \\ \dot{\psi}_{des} \\ 0 \end{bmatrix},
$$

the system (10) can be expressed in the more convenient form:

$$
\dot{\eta} = A\eta + Bu + \omega \qquad (11)
$$

The dynamic system can be considered to have the outputs

$$
y = \begin{bmatrix} \eta_1 \\ \eta_2 \end{bmatrix} = \begin{bmatrix} v_y - v_y^{des} \\ \dot{\psi} - \dot{\psi}^{des} \end{bmatrix}
$$

which means that the system to be controlled is

$$
\begin{aligned}
\dot{\eta} &= A\eta + Bu + \omega \\
y &= C\eta
\end{aligned}
\qquad (12)
$$

where C is defined as

$$
C = \begin{bmatrix} 1 & 0 & 0 \\ 0 & 1 & 0 \end{bmatrix}.
$$

The system (12) is controlled in the sense that the output y is supposed to go to zero. If y≡0, the vehicle dynamics follows the dynamics of the reference model exactly, which means that the vehicle behaves in the desired linear fashion.

The feedback control strategy used for the active RWS system is to use the linear quadratic regulator, which is a linear optimal controller. With this strategy, the controller is designed as a state feedback control, which means that the control signal $u = (\delta_r^{cmd})_{FB}$ is given by:

$$u = -L\eta \qquad (13)$$

where L is a matrix such that the cost function

$$J\big(\eta(t),u(t)\big) = \int_0^\infty \big(\eta^T(t)\,Q\eta(t) + u^T(t)\,Ru(t)\big)\,dt \qquad (14)$$

is minimized, where Q is a positive semidefinite matrix and R is a positive definite matrix. Since the pair (A,B) in equation (11) is controllable, the control law (13) is applicable to the open-loop system (11). The closed-loop system then becomes:

$$\dot{\eta} = (A - BL)\,\eta + \omega$$

$$y = C\eta$$

where (A-BL) is Hurwitz and therefore makes the system

$$\dot{\eta}(t) = (A - BL)\eta(t),\ \eta(0) = \eta_0$$

$$y = C\eta$$

asymptotically stable, which implies that:

$$\|y(t)\| \to 0 \quad \text{as} \quad t \to \infty$$

The weighting matrix Q is chosen as

$$Q = \begin{bmatrix} q_1 & 0 & 0 \\ 0 & q_2 & 0 \\ 0 & 0 & 0 \end{bmatrix}$$

where $q_1$ and $q_2$ are positive constants. This means that the cost function J in (14) becomes

$$J\big(\eta(t),u(t)\big) = \int_0^\infty \big(q_1\eta_1^2 + q_2\eta_2^2 + Ru^2\big)dt \qquad (15)$$

The reason for the choice of Q is apparent from equation (15). The feedback control is now designed so that the lateral speed error $\eta_1$, the yaw rate error $\eta_2$ and the control signal u are all minimized with the weighting coefficients $q_1$, $q_2$ and R respectively. These weighting coefficients are tuned so that the dynamic behavior of the vehicle becomes satisfactory. Herein, the idea is, that the yaw rate error $\eta_2$ is the dominating factor, which essentially means that $q_2 >> q_1$.

Once $q_1$ and q are chosen, R is adjusted so that the control signal $u = (\delta_r^{cmd})_{FB}$ has reasonable values.

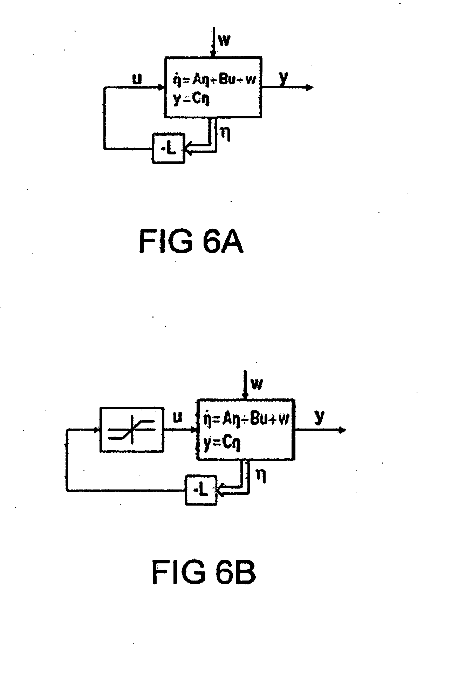

Reference is now made to FIGS. 6A and 6B which are block diagrams of the feedback control system in the time domain without saturation and with saturation of the control signal u. It consists of the system as given by equations (12) together with the state feedback matrix L. When using linear control theory, there are no restrictions on the control signal, which means that u is allowed to grow unlimited. Such situation is illustrated in FIG. 6A. However, this is not true in the case of an active RWS system, since the control signal is actually bounded according to the limitations of the RWS actuators, i.e. the control signal u must satisfy $|u| \leq \delta_r^{max}$ . A more realistic model of the feedback control system is therefore given by the block diagram in FIG. 6B, where a saturation block 7 is introduced in order to limit the control signal u.

List of reference signs

1    Vehicle
2    Rear wheels
3    Actuator(s)
4    Control system
5    Front wheels
6    Steering wheel
7    Saturation block

## Claims

1.  A method of controlling an active rear wheel steering system of a vehicle comprising steerable rear wheels (2) to be steered by means of at least one actuator (3) operatively coupled to the rear wheels (2) for steering thereof on basis of a rear wheel angle command signal $\delta_r^{cmd}$ provided from a control system (4) to thereby effect a rear wheel angle $\delta_r$;
    said control system (4) being provided with a longitudinal speed $v_x$ of the vehicle, a lateral speed $v_y$ of the vehicle, a yaw rate of the vehicle $\Psi$, a front wheel angle $\delta_f$ of the front wheels of the vehicle and a rear wheel angle $\delta_r$ of the rear wheels of the vehicle;
    with the dynamics of the actuator acting on the rear wheels being assumed to meet the following condition:

$$\dot{\delta}_r + \omega_0 \delta_r = \omega_0 \delta_r^{cmd}$$

with $\omega_0$ being a selectable maximum speed of the actuator; and
with the dynamics of the vehicle being assumed to meet the following conditions:

$$\begin{bmatrix} \dot{v}_y \\ \ddot{\psi} \end{bmatrix} = \begin{bmatrix} a_{11} & a_{12} \\ a_{21} & a_{22} \end{bmatrix} \begin{bmatrix} v_y \\ \dot{\psi} \end{bmatrix} + \begin{bmatrix} b_{f1} \\ b_{f2} \end{bmatrix} \delta_f + \begin{bmatrix} b_{r1} \\ b_{r2} \end{bmatrix} \delta_r$$

with $a_{11}$, $a_{12}$, $a_{21}$, $a_{22}$, $b_{f1}$, $b_{f2}$, $b_{r1}$, $b_{r2}$ being selectable constants to determine reference values $v_y^{des}$ , $\dot{\Psi}^{des}$ of the lateral speed $v_y$ and the yaw rate $\Psi$, respectively;

said control system (4) enabling feedback control of the active rear wheel steering system and being adapted to generate a feedback rear wheel angle command signal $( \delta_r^{cmd} )_{FB}$ using:

$$\begin{bmatrix} \dot{\eta}_1 \\ \dot{\eta}_2 \\ \dot{\eta}_3 \end{bmatrix} = \begin{bmatrix} a_{11} & a_{12} & b_{r1} \\ a_{21} & a_{22} & b_{r2} \\ 0 & 0 & -\omega_0 \end{bmatrix} \begin{bmatrix} \eta_1 \\ \eta_2 \\ \eta_3 \end{bmatrix} + \begin{bmatrix} 0 \\ 0 \\ \omega_0 \end{bmatrix} + (\delta_r^{cmd})_{FB} + w$$

where the states $\eta_1$, $\eta_2$, $\eta_3$ are an error of the lateral speed $v_y$, an error of the yaw rate $\dot{\Psi}$, and the rear wheel angle $\delta_r$, respectively, given by

$$[\eta] = \begin{bmatrix} \eta_1 \\ \eta_2 \\ \eta_3 \end{bmatrix} = \begin{bmatrix} v_y - v_y^{des} \\ \dot{\psi} - \dot{\psi}^{des} \\ \delta_r \end{bmatrix}$$

with w being a disturbance term given by

$$w = \begin{bmatrix} b_{f1} \\ b_{f2} \\ 0 \end{bmatrix} \delta_f + \begin{bmatrix} a_{11} & a_{12} & b_{r1} \\ a_{21} & a_{22} & b_{r2} \\ 0 & 0 & -\omega_0 \end{bmatrix} \begin{bmatrix} v_y^{des} \\ \dot{\psi}_{des} \\ 0 \end{bmatrix} ;$$

where the feedback rear wheel angle command signal $( \delta_r^{cmd} )_{FB}$ is determined by

$$( \delta_r^{cmd} )_{FB} = -L\eta$$

where L is a matrix such that the cost function

$$J = \int_0^\infty \left( q_1 \eta_1^2 + q_2 \eta_2^2 + R \left( \delta_r^{cmd} \right)_{FB}^2 \right) dt$$

is minimized, where $q_1$, $q_2$ and R are selectable weighting constants.

2. The method of claim 1, wherein said control system (4) enables feed-forward control of the active rear wheel steering system and being adapted to generate a feed-forward rear wheel angle command signal $( \delta_r^{cmd} )_{FF}$ in proportionality to the front wheel angle $\delta_f$ of the front wheels of the vehicle determined by

$$( \delta_r^{cmd} )_{FF} = K \cdot \delta_f$$

with K being a selectable parameter.

3. The method of claim 2, wherein K is selected in dependency on the longitudinal speed $v_x$ of the vehicle and an estimation of the coefficient of friction between the tire and road $\hat{\mu}$.

**Patentansprüche**

1.  Verfahren zur Regelung eines aktiven Hinterradlenkungssystems eines Fahrzeugs, das lenkbare Hinterräder (2) umfasst, die mit wenigstens einem Stellantrieb (3) zu lenken sind, der in funktionaler Verbindung mit den Hinterrädern (2) ist, um diese auf der Grundlage eines Hinterradwinkelbefehlssignals $\delta_r{}^{cmd}$ zu lenken, das von einem Steuerungssystem (4) abgegeben wird, um damit einen Hinterradwinkel $\delta_r$ zu bewirken;

    wobei dem Steuerungssystem (4) eine Längsgeschwindigkeit $v_x$ des Fahrzeugs, eine Seitengeschwindigkeit $v_y$ des Fahrzeugs, eine Gierrate $\dot{\Psi}$ des Fahrzeugs, ein Vorderradwinkel $\delta_f$ der Vorderräder des Fahrzeugs und ein Hinterradwinkel $\delta_r$ der Hinterräder des Fahrzeugs mitgeteilt wird; wobei von der Dynamik des Stellantriebs, die auf die Hinterräder wirkt, angenommen wird, dass sie die nachstehende Gleichung erfüllt:

$$\dot{\delta}_r + \omega_0\delta_r = \omega_0\delta_r^{cmd}$$

wobei $\omega_0$ eine wählbare Höchstgeschwindigkeit des Stellantriebs ist; und
wobei von der Dynamik des Fahrzeugs angenommen wird, dass sie folgende Gleichung erfüllt:

$$\begin{bmatrix} \dot{v}_y \\ \ddot{\psi} \end{bmatrix} = \begin{bmatrix} a_{11} & a_{12} \\ a_{21} & a_{22} \end{bmatrix}\begin{bmatrix} v_y \\ \dot{\psi} \end{bmatrix} + \begin{bmatrix} b_{f1} \\ b_{f2} \end{bmatrix}\delta_f + \begin{bmatrix} b_{r1} \\ b_{r2} \end{bmatrix}\delta_r$$

wobei $a_{11}$, $a_{12}$, $a_{21}$, $a_{22}$, $b_{f1}$, $b_{f2}$, $b_{r1}$, $b_{r2}$ wählbare Konstanten zur Bestimmung der Referenzwerte $V_y{}^{des}$, $V_y{}^{des}$, $\Psi^{des}$ der Seitengeschwindigkeit $v_y$ bzw. der Gierrate $\Psi$ sind;

wobei das Steuerungssystem (4) eine rückgekoppelte Regelung des aktiven Hinterradlenkungssystems ermöglicht und geeignet ist, ein rückgekoppeltes Hinterradwinkel-Befehlssignal $(\delta_r{}^{cmd})_{FB}$ zu generieren, unter Verwendung von:

$$\begin{bmatrix} \dot{\eta}_1 \\ \dot{\eta}_2 \\ \dot{\eta}_3 \end{bmatrix} = \begin{bmatrix} a_{11} & a_{12} & b_{r1} \\ a_{21} & a_{22} & b_{r2} \\ 0 & 0 & -\omega_0 \end{bmatrix}\begin{bmatrix} \eta_1 \\ \eta_2 \\ \eta_3 \end{bmatrix} + \begin{bmatrix} 0 \\ 0 \\ \omega_0 \end{bmatrix} + (\delta_r^{cmd})_{FB} + w$$

wobei die Zustände $\eta_1$, $\eta_2$, $\eta_3$ ein Fehler der Seitengeschwindigkeit $v_y$, ein Fehler der Gierrate $\Psi$ bzw. des Hinterradwinkels $\delta_r$ sind, gegeben durch

$$[\eta] = \begin{bmatrix} \eta_1 \\ \eta_2 \\ \eta_3 \end{bmatrix} = \begin{bmatrix} v_y - v_y^{des} \\ \dot\psi - \dot\psi^{des} \\ \delta_r \end{bmatrix}$$

wobei w eine Störgröße ist, gegeben durch

$$w = \begin{bmatrix} b_{f1} \\ b_{f2} \\ 0 \end{bmatrix} \delta_f + \begin{bmatrix} a_{11} & a_{12} & b_{r1} \\ a_{21} & a_{22} & b_{r2} \\ 0 & 0 & -\omega_0 \end{bmatrix} \begin{bmatrix} v_y^{des} \\ \dot\psi_{des} \\ 0 \end{bmatrix} ;$$

wobei das rückgekoppelte Hinterradwinkel-Befehlssignal $(\delta_r^{cmd})_{FB}$ bestimmt ist durch

$$(\delta_r^{cmd})_{FB} = -L\eta$$

wobei L eine Matrix ist, so dass die Kostenfunktion

$$J = \int_0^\infty \left( q_1 \eta_1^2 + q_2 \eta_2^2 + R \left( \delta_r^{cmd} \right)_{FB}^2 \right) dt$$

minimiert ist, wobei $q_1$, $q_2$ und R wählbare Gewichtungskonstanten sind.

2. Verfahren gemäß Anspruch 1, wobei das Steuerungssystem (4) die Vorwärtsregelung des aktiven Hinterradlenkungssystems ermöglicht und geeignet ist, ein Vorwärtsregelungs-Hinterradwinkel-Befehlssignal $(\delta_r^{cmd})_{FF}$ proportional zum Vorderradwinkel $\delta_f$ der Vorderräder des Fahrzeugs zu generieren, bestimmt durch

$$(\delta_r^{cmd})_{FF} = K \cdot \delta_f$$

wobei K ein wählbarer Parameter ist.

3. Verfahren gemäß Anspruch 2, wobei K in Abhängigkeit von der Längsgeschwindigkeit $v_x$ des Fahrzeugs und einer

Schätzung des Reibungskoeffizienten $\hat{\mu}$ zwischen Reifen und Straße gewählt wird.

**Revendications**

1. Procédé pour contrôler un système de direction active des roues arrière d'un véhicule comprenant des roues arrières dirigeables (2) pouvant être dirigées au moyen d'au moins un actionneur (3) en liaison opérationnelle avec les roues arrière (2) pour diriger celles-ci sur la base d'un signal de commande d'angle des roues arrière $\delta_r^{cmd}$ fourni par un système de commande (4) pour produire ainsi un angle de roues arrière $\delta_r$,
ledit système de commande (4) recevant une vitesse longitudinale $v_x$ du véhicule, une vitesse latérale $v_y$ du véhicule, un taux de lacet $\Psi$ du véhicule, un angle des roues avant $\delta_f$ des roues avant du véhicule et un angle des roues arrière $\delta_r$ des roues arrière du véhicule,
la dynamique de l'actionneur agissant sur les roues arrière étant supposée satisfaire la condition suivante :

$$\dot{\delta}_r + \omega_0 \delta_r = \omega_0 \delta_r^{cmd}$$

où $\omega_0$ est une vitesse maximale sélectionnable de l'actionneur ; et
la dynamique du véhicule étant supposée satisfaire les conditions suivantes :

$$\begin{bmatrix} \dot{v}_y \\ \ddot{\psi} \end{bmatrix} = \begin{bmatrix} a_{11} & a_{12} \\ a_{22} & a_{22} \end{bmatrix} \begin{bmatrix} v_y \\ \dot{\psi} \end{bmatrix} + \begin{bmatrix} b_{f1} \\ b_{f2} \end{bmatrix} \delta_f + \begin{bmatrix} b_{r1} \\ b_{r2} \end{bmatrix} \delta_r$$

où $a_{11}$, $a_{12}$, $a_{21}$, $a_{22}$, $b_{f1}$, $b_{f2}$, $b_{r1}$, $b_{r2}$ sont des constantes sélectionnables servant à déterminer les valeurs de référence $v_y^{des}$, $\dot{\Psi}^{des}$ de la vitesse latérale $v_y$ et du taux de lacet $\dot{\Psi}$, respectivement ;
ledit système de commande (4) permettant une commande par rétroaction du système de direction active des roues arrière et étant adapté pour générer un signal de rétroaction de commande de l'angle des roues arrière $(\delta_r^{cmd})_{FB}$ à l'aide de :

$$\begin{bmatrix} \dot{\eta}_1 \\ \dot{\eta}_2 \\ \dot{\eta}_3 \end{bmatrix} = \begin{bmatrix} a_{11} & a_{12} & b_{r1} \\ a_{21} & a_{22} & b_{r2} \\ 0 & 0 & -\omega_0 \end{bmatrix} - \begin{bmatrix} \eta_1 \\ \eta_2 \\ \eta_3 \end{bmatrix} + (\delta_r^{cmd})_{FB} + w$$

où les états $\eta_1$, $\eta_2$, $\eta_3$ sont une erreur de la vitesse latérale $v_y$, une erreur du taux de lacet $\dot{\Psi}$, et l'angle des roues arrière $\delta_r$, respectivement, obtenus par :

$$[\eta] = \begin{bmatrix} \eta_1 \\ \eta_2 \\ \eta_3 \end{bmatrix} = \begin{bmatrix} v_y - v_y^{des} \\ \dot{\psi} - \dot{\psi}^{des} \\ \delta_r \end{bmatrix}$$

où w est un terme de perturbation donné par :

$$w = \begin{bmatrix} b_{f1} \\ b_{f2} \\ 0 \end{bmatrix} \delta_f + \begin{bmatrix} a_{11} & a_{12} & b_{r1} \\ a_{21} & a_{22} & b_{r2} \\ 0 & 0 & -\omega_0 \end{bmatrix} \begin{bmatrix} v_y^{des} \\ \dot{\psi}^{des} \\ 0 \end{bmatrix}$$

où le signal de rétroaction de commande de l'angle des roues arrière $(\delta_r^{cmd})_{FB}$ est déterminé par :

$$(\delta_r^{cmd})_{FB} = -L\eta$$

où L est une matrice telle que la fonction de coût

$$J = \int_0^\infty (q_1\eta_1^2 + q_2\eta_2^2 + R(\delta_r^{cmd})_{FB}^2)dt$$

soit minimisée, où $q_1$, $q_2$ et R sont des constantes de pondération sélectionnables.

2. Procédé selon la revendication 1, dans lequel ledit système de commande (4) permet une commande prédictive du système de direction active des roues arrière et est adapté pour générer un signal de commande prédictive de l'angle des roues arrière $(\delta_r^{cmd})_{FF}$ proportionnel à l'angle des roues avant $\delta_f$ des roues avant du véhicule déterminé par :

$$(\delta_r^{cmd})_{FF} = K \cdot \delta_r$$

où K est un paramètre sélectionnable.

3. Procédé selon la revendication 2, dans lequel K est sélectionné en fonction de la vitesse longitudinale $v_x$ du véhicule et d'une estimation du coefficient de friction entre le pneu et la route $\hat{\mu}$.

## FIG 1

## FIG 2

FIG 3

FIG 4

FIG 5

FIG 6A

FIG 6B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5615117 A
- US 6073067 A
- US 2002195293 A

### Non-patent literature cited in the description

- **ALVAREZ, L. et al.** Dynamic Friction Model-based Tire-Road Friction Estimation and Emergency Braking Control. *AMSE Journal of Dynamic Systems, Measurement, and Control,* 2005, vol. 127, 22-32
- **GUSTAFSSON, F.** Slip-Based Tire-Road Friction Estimation. *Automatica,* 1997, vol. 33 (6), 1087-1099
- **RADE et al.** *Mathematics Handbook for Science and Engineering,* 1998
- **MERIAM, J. L. et al.** Engineering Mechanics - Dynamics. John Wiley & Sons, Incs, 1998